# EUROPEAN PATENT SPECIFICATION

(11) **EP 0 745 191 B1**
(45) Date of publication and mention of the grant of the patent: **02.08.2000**
(21) Application number: 95911673.2
(22) Date of filing: 08.02.1995
(51) Int. Cl.: F16B 19/00, B25B 1/08, B25B 5/08, B25B 5/10

(54) **SLIDING CLAMP**
GLEITENDE KLEMMVORRICHTUNG
DISPOSITIF DE SERRAGE COULISSANT

(30) Priority: 25.02.1994 US 201795
(43) Date of publication of application: 04.12.1996
(73) Proprietor: KURT MANUFACTURING COMPANY, INC., Minneapolis, MN 55421 (US)
(72) Inventor: BERNSTEIN, Leon, M., Minnetonka, MN 55305 (US)
(74) Representative: Metman, Karel Johannes
(86) International application number: US9501708
(87) International publication number: WO9523295

(56) References cited:
- US-A- 2 430 613
- US-A- 2 625 861
- US-A- 4 139 188
- US-A- 4 804 171

## Description

### BACKGROUND OF THE INVENTION

The present invention relates to a device for securely holding a workpiece or a part. More particularly, the present invention relates to a device having a clamping action provided by a sliding member which engages and urges the workpiece against a stop.

Many mechanical operations require that one or more workpieces be held stationary for a period of time. Various types of clamps and other devices are known in the art for securing a workpiece in a desired position to facilitate an operation on the workpiece.

An apparatus for securing one or more workpieces is shown in Bishop U.S. Patent No. 4,805,888, issued February 21, 1989. The Bishop patent describes an orbital action clamp comprised of a bolt-like member, a sliding clamp member and a mounting platen. The bolt-like member is formed of a threaded shaft and an eccentric head. The sliding clamp member has a centered through bore adapted to receive the shaft of the bolt-like member. A larger bore, concentric with the through bore, accepts the head and provides a shoulder such that the head will nest within the larger bore. The threaded section of the bolt-like member engages a threaded bore in the mounting platen.

Rotation of the Bishop bolt-like member results in an orbital action by the head. That is, rotation of the eccentric head within the clamp member produces a camming action against a wall of the large bore of the clamp member. This camming action produces motion of the clamp member in two directions. The first motion is against the stop, while the second is across the clamping surface.

In most cases, the Bishop clamp member will be fully engaged with the workpiece without being securely anchored to the platen. In some cases, the head will tighten against the shoulder of the clamp member before the workpiece is clamped to the stop.

A clamping device according to the preamble of claim 1 is disclosed in US-A-4,139,188. This documents shows a machine vise having an offset cam to effectuate movement of a clamping member toward a stop. The vise includes a cam member that operatively connects the moveable jaw with a pair of wedge elements disposed in the body. Upon rotation of a cam member in a first direction, the wedge elements are moved into locking relation with the body and the moveable jaw is moved a small increment of distance toward the fixed jaw to firmly grip a workpiece. To release the workpiece, the cam member is rotated in the opposite direction, thereby urging the moveable jaw away from the fixed jaw and moving the wedge elements out of locking relation with the body.

### SUMMARY OF THE INVENTION

The clamping device according to the invention includes the features of the characterizing portion of claim 1. Preferred embodiments are defined in dependent claims 2 - 12.

The present invention provides a device having a straight sliding clamp member which fully engages a workpiece against a stop while being simultaneously anchored to a platen. The clamping device is comprised of an actuator-fastener, a clamping member and a spring element.

The fastener may be a standard flat-head bolt formed with a threaded shaft and a tapered head, the taper forming an outer peripheral bearing surface. Preferably, the tapered surfaces or curved side surfaces have a contact angle between 30° and 45° as measured from the longitudinal axis of the fastener. The clamping member has a through bore adapted to receive the threaded shaft. A conical bore, concentric with and larger than the through bore, accepts the head and provides an inner peripheral bearing surface. The threaded shaft of the fastener engages a threaded bore in the platen.

The clamping member has a clamping surface, which may have different shapes to clamp different types of workpieces. For example, the clamping member can be rectangular, square, hexagonal, triangular or round. In addition, the clamping member can clamp two parts simultaneously when the conical bore is positioned between the parts. The clamping member can rotate slightly about the conical bore such that approximately equal clamping forces are applied to each part when the fastener is tightened.

As the fastener threads are turned to engage the threads of a platen, the outer bearing surface of the tapered head is drawn toward the platen and into engagement with the inner bearing surface of the conical bore. The resulting force on the clamping member urges the clamping member toward the workpiece. The clamping member will "slide" toward the workpiece, engage the workpiece and clamp the workpiece against the stop. Simultaneously the force on the clamping member will urge the clamping member toward the platen to anchor the a clamping member to the platen when the workpiece is clamped against the stop. Generally, the clamping forces of the clamping member upon the part and the securing friction forces holding the clamping member to the platen are related to the tapered contact surfaces. For example, the clamping forces and the securing forces are approximately equal for tapered contact surfaces of 45°.

The clamping member is retracted by the spring element when the actuator-fastener is loosened. Preferably, the embodiment includes a support member. The support member, like the clamping member, has an inner bearing surface that engages the outer tapered bearing surface of the actuator-fastener. The support member slides upon the platen working surface similar to the clamping member. If desired, the support member is provided with a second clamping face that is used to clamp a second workpiece against a second stop. The spring element again retracts the clamping member and the support member away from the workpieces.

### BRIEF DESCRIPTION OF THE DRAWINGS

Figure 1A is a top view of a clamping device made in accordance with the present invention.
Figure 1B is a front sectional view of the clamping device of Figure 1A.
Figure 2A is a top view of the clamping device clamping two opposed workpieces.
Figure 2B is a front sectional view of the clamping device of Figure 2A.
Figure 3A is a top view of a second embodiment of a clamping device made in accordance with the present invention.
Figure 3B is a front sectional view of the clamping device of Figure 3A.

### DETAILED DESCRIPTION OF THE PREFERRED EMBODIMENTS

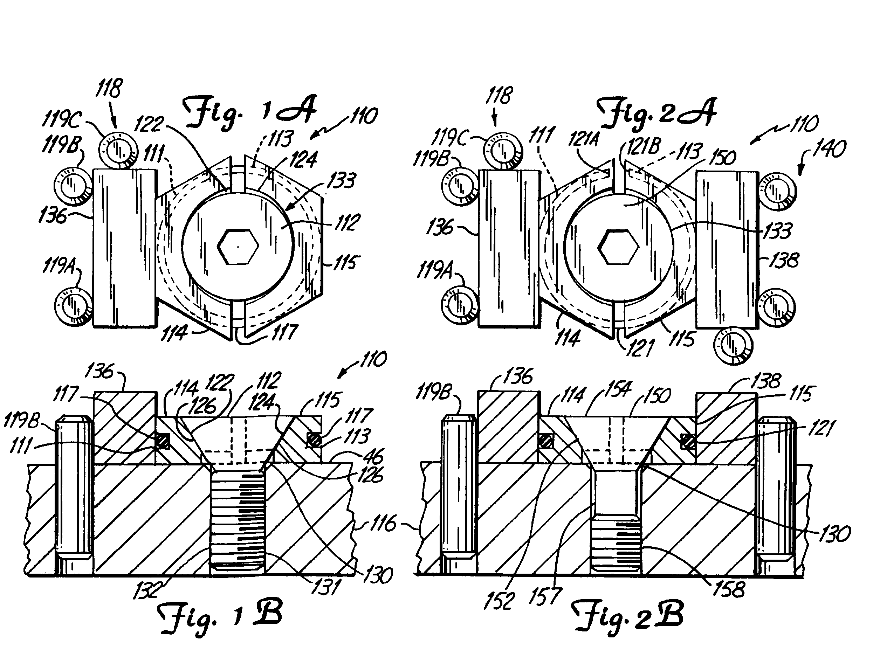

An embodiment of a clamping device in accordance with the present invention is shown in Figures 1A, 1B, 2A and 2B designated generally at 110. The clamping device 110 includes a fastener 112, a clamping member 114, a support member 115 and a spring element 117. A platen 116 includes a stop 118 (herein illustrated as a plurality of stop pins 119A, 119B and 119C.)

Referring to Figure 1B, the spring element 117 joins the clamping member 114 and the support member 115 to the fastener 112. When the fastener 112 is turned and lifted from the platen surface 46, the spring element 117 retracts the clamping member 114 away from a workpiece 136. Preferably, the spring element 117 comprises an endless band made from an elastomeric material such as rubber. Other spring elements such as a snap ring 121 (illustrated in Figures 2A and 2B) formed from, for example, steel snap wire are also suitable. The snap ring 121 has separated ends 121A and 121B. The spring element 117 and snap ring 121 are located in grooves 111 and 113 of the clamping member 114 and the support member 115, respectively, which are substantially co-planer.

The clamping member 114 and the support member 115 each have an inner peripheral bearing surface 122 and 124, respectively that are engaged by an outer tapered peripheral bearing surface 126 of the fastener 112. When oriented such that the inner bearing peripheral surfaces 122 and 124 generally face each other as illustrated in Figures 1A and 2A, the clamping member 114 and the support member 115 form a through bore 130 and a generally concentric conical bore 133. Preferably, the inner tapered surfaces 122 and 124 have a contact angle between 30° and 45° as measured from the longitudinal axis of the fastener 112.

Although the support member 115 is illustrated as being substantially identical to the clamping member 114, it should be noted that it is not necessary in that the support member 115 can take many forms with the bore 130 not being necessarily circular or symmetrical. In addition, the presence of the support member 115 is also not necessary for operation of the embodiment of Figures 1A and 1B in that the spring element 117 could be joined to the fastener 112 directly, for example, positioned in a suitable annular groove.

The clamping device 110 is set up for use by positioning the clamping member 114 and the support member 115 about the fastener 112. The spring element 117 holds the clamping member 114 and the support member 115 together with the tapered fastener 112 therebetween. Referring to Figure 1B, a threaded portion 131 is then positioned in a threaded bore 132. As the fastener 112 is turned, the threaded portion 131 draws the outer bearing surface 126 of the fastener 112 toward the platen surface 116 and into contact with the inner bearing surfaces 122 and 124. As illustrated in Figure 1B, the clamping member 114 can be used to secure a single workpiece 136 against the stop 118, while in Figure 2B, since contract is made uniformly between the clamping member 114 and the support member 115 (operating as a second clamping member), the clamping device 110 is well suited to secure an additional workpiece 138 against a second suitable stop 140. Although not shown in this embodiment, notches may be provided in both the clamping member 114 and the support member 115 to secure the workpieces 136 and 138.

When used to hold two workpieces as illustrated in Figure 2B, a fastener 150 may be preferred. The fastener 150 has a tapered concentric surface 152 located on a head 154. A shank 157 extends from the head 154 to a threaded portion 158. The threaded portion 158 mates with the threaded bore 132 provided in the platen 116. Preferably, the diameter of the shank 157 between the head 154 and the threaded portion 158 is less than the minimum diameter of the threaded bore 132. The fastener 150 will bend slightly to accommodate differences in the size of the workpieces 136 and 138.

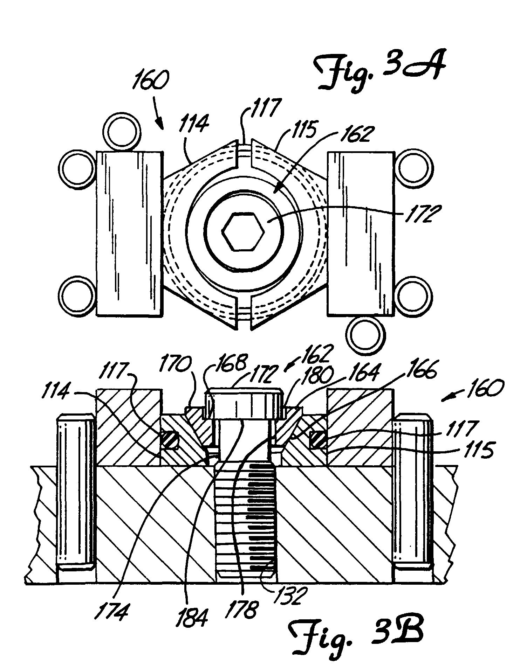

A second embodiment of a clamping device of the present invention is illustrated in Figures 3A and 3B generally at 160. The clamping device 160 includes the clamping member 114, the support member 115 and the spring element 117, previously described. The clamping device 160 differs from the clamping device 110 in that it includes an actuator-fastener generally indicated at 162 which allows for greater tolerances in size between the workpieces 136 and 138 to be clamped. Specifically, the actuator-fastener 162 includes an actuator insert 164. The actuator insert 164 forms a tapered outer bearing surface 166 that engages the inner bearing surfaces of the clamping member 114 and the support member 115. The actuator insert 164 includes a flat bearing surface 168, preferably recessed from a top surface 170. A suitable bolt 172 engages the surface 168 when the bolt 172 is turned and drawn into the bore 132. A shank 174 of the bolt 172 extends through an aperture 178 in the actuator insert 164. The aperture 178 and a recess 180 are of sufficient size to allow limited movement of the actuator insert 164 relative to the fixed position of the bolt 172. This limited movement allows for variances in the size of the workpieces 136 and 138 by allowing the head 184 to slide upon the surface 168, if needed. In this manner, the clamping member 114 and the support member 115 can be at slightly different distances from a center axis of the bolt 172.

Although the present invention has been described with reference to preferred embodiments, workers skilled in the art will recognize that changes may be made in form and detail without departing from the spirit and scope of the invention. For example, the inner and outer bearing surfaces are both described as tapered. Alternatively, any surface configuration may be employed for one or both of the inner and outer bearing surfaces so long as their interaction provides a contact area which imparts transverse and axial forces to the clamping members.

## Claims

1. A clamping device (110, 160) for holding a workpiece (136) against a stop (118) on a platen (116), the platen (116) having a platen working surface (46), the clamping device (110, 160) comprising:
a clamping member (114) having at least one clamping face adapted to engage the workpiece;
spring means (117) engaging the clamping member (114) for retracting the clamping member (114) away from the workpiece (136); and
an actuator (112, 150, 162) for moving the clamping member (114) toward the stop (118);
**characterized in that** the actuator (112, 150, 162) is securable into the platen (116) along a fixed reference axis intersecting with the platen working surface (46) and includes a tapered bearing surface (126, 152, 166) engaging the clamping member (114), whereby urging movement of the tapered bearing surface (126, 152, 166) simultaneously anchors the clamping member (114) relative to the platen and slides the clamping member (114) in a direction along the platen working surface toward the stop (118), the tapered surface being located on the actuator such that on movement of the actuator along said axis towards the platen said urging movement of the tapered surface is directed only toward the platen working surface (46) parallel to the reference axis.

2. The device of claim 1, characterized by a support member (115 supporting the spring means (117).

3. The device of claim 2, wherein the platen (116) includes a second stop (140), and characterized in that the urging movement of the tapered bearing surface (152, 166) simultaneously anchors the support member (115) to the platen and moves the support member (115) toward the second stop (140).

4. The device of claim 3, characterized in that the support member (140) includes a clamping face adapted to engage a second workpiece (138).

5. The device of claim 4, characterized in that the spring means (117) comprises a band made of an elastic material.

6. The device of claim 5, characterized in that the spring means (117) comprises a snap ring (121).

7. The device of claim 3, characterized in that the support member (115) and the clamping member (114) each include a perimeter groove (111, 113), wherein the spring means (117) is located in the perimeter grooves (111, 113) of the clamping member (114) and the support member (115).

8. The device of claim 3, characterized in that the clamping member (114) includes an inner bearing surface (122) and the support member (115) includes an inner bearing surface (124), wherein the actuator (150, 162) is disposed between the support member (115) and the clamping member (114) to engage a portion of each inner bearing surface (122, 124).

9. The device of claim 8, characterized in that the actuator (150) comprises a fastener (150) having a tapered head (154), the tapered head (154) engaging a portion of each inner bearing surface (122, 124).

10. The device of claim 8, characterized in that each inner bearing surface (122, 124) is tapered, and in that the tapered bearing surface (152, 166) of the actuator (150, 162) includes a first portion engaging the tapered inner bearing surface (124) of the support member (115) and a second portion engaging the tapered inner bearing surface (122) of the clamping member (114), and means for moving the actuator (150, 162) toward the platen working surface (46).

11. The device of claim 10, characterized in that the actuator (162) includes an aperture (178) and the means for moving comprises a fastener (172) having a shank (174) extending through the aperture (178).

12. The device of claim 11, characterized in that the aperture (178) has a diameter larger than the diameter of the shank (174) to allow movement of the actuator (162) relative to the shank (174).

## Patentansprüche

1. Klemmvorrichtung (110, 160) zum Festhalten eines Werkstücks (136) an einem Anschlag (118) auf einer Platte (116), wobei die Platte (116) eine Plattenarbeitsfläche (46) aufweist, wobei die Klemmvorrichtung (110, 160) aufweist:
ein Klemmglied (114), aufweisend mindestens eine Klemmfläche, die eingerichtet ist, um an dem Werkstück anzugreifen;
ein an dem Klemmglied (114) angreifendes Federmittel (117) zum Wegziehen des Klemmgliedes (114) von dem Werkstück (136); und
einen Steller (112, 150, 162) zum Bewegen des Klemmglieds (114) zu dem Anschlag (118),
dadurch gekennzeichnet, dass der Steller (112, 150, 162) in der Platte (116) entlang einer festgelegten sich mit der Plattenarbeitsfläche (46) schneidenden Referenzachse arretierbar ist, und eine an dem Klemmglied (114) angreifende konische Lagerfläche (126, 152, 166) aufweist, wobei die Druckbewegung der konischen Lagerfläche (126, 152, 166) gleichzeitig das Klemmglied (114) relativ zu der Platte (116) festlegt und das Klemmglied (114) in einer Richtung entlang der Plattenarbeitsfläche zu dem Anschlag (118) hin verschiebt, wobei die konische Fläche an dem Steller derart angeordnet ist, dass beim Bewegen des Stellers entlang der Achse zu der Platte (116) hin die Druckbewegung der konischen Fläche nur zu der Plattenarbeitsfläche (46) hin parallel zu der Referenzachse gerichtet ist.

2. Vorrichtung nach Anspruch 1, gekennzeichnet durch ein Trageglied (115), das das Federmittel (117) trägt.

3. Vorrichtung nach Anspruch 2, bei der die Platte (116) einen zweiten Anschlag (140) aufweist, und dadurch gekennzeichnet ist, dass die Druckbewegung der konischen Lagerfläche (152, 166) gleichzeitig das Trageglied (115) an der Platte festlegt und das Trageglied (115) zu dem zweiten Anschlag (140) hin bewegt.

4. Vorrichtung nach Anspruch 3, dadurch gekennzeichnet, dass das Trageglied (115) eine Klemmfläche aufweist, die eingerichtet ist, um an einem zweiten Werkstück (138) anzugreifen.

5. Vorrichtung nach Anspruch 4, dadurch gekennzeichnet, dass das Federmittel (117) ein Band aufweist, das aus einem elastischen Material hergestellt ist.

6. Vorrichtung nach Anspruch 5, dadurch gekennzeichnet, dass das Federmittel (117) einen Sprengring (121) aufweist.

7. Vorrichtung nach Anspruch 3, dadurch gekennzeichnet, dass das Trageglied (115) und das Klemmglied (114) jeweils eine Umfangsnut (111, 113) aufweisen, wobei das Federmittel (117) in den Umfangsnuten (111, 113) des Klemmglieds (114) und des Tragegliedes (115) angeordnet ist.

8. Vorrichtung nach Anspruch 3, dadurch gekennzeichnet, dass das Klemmglied (114) eine innere Lagerfläche (122) aufweist und das Trageglied (115) eine innere Lagerfläche (124) aufweist, wobei der Steiler (150, 162) zwischen dem Trageglied (115) und dem Klemmglied (114) angeodnet ist, um an einem Abschnitt jeder Lagerfläche (122, 124) anzugreifen.

9. Vorrichtung nach Anspruch 8, dadurch gekennzeichnet, dass der Steiler (150) eine Halterung (150) mit einem konischen Kopf (154) aufweist, wobei der konische Kopf (154) an einem Abschnitt jeder Lagerfläche (122, 124) angreift.

10. Vorrichtung nach Anspruch 8, dadurch gekennzeichnet, dass jede innere Lagerfläche (122, 124) konisch ausgestaltet ist und dadurch, dass die konische Lagerfläche (152, 166) des Stellers (150, 162) einen ersten an der konischen inneren Lagerfläche (124) des Trageglieds (115) angreifenden Abschnitt und einen zweiten an der konischen inneren Lagerfläche (122) des Klemmgliedes (114) angreifenden Abschnitt und Mittel zum Bewegen des Stellers (150, 162) zu der Plattenarbeitsfläche (46) hin aufweist.

11. Vorrichtung Anspruch 10, dadurch gekenzeichnet, dass der Steller (162) eine Öffnung (178) aufweist und das Mittel zum Bewegen des Stellers (150, 162) eine Halterung (172) aufweist, die einen sich durch die Öffnung (178) erstreckenden Schaft (174) aufweist.

12. Vorrichtung nach Anspruch 11, dadurch gekennzeichet, dass die Öffnung (178) einen Durchmesser aufweist, der grösser ist als der Durchmesser des Schaftes (174), um die Bewegung des Stellers (162) relativ zu dem Schaft (174) zu ermöglichen.

## Revendications

1. Dispositif de serrage (110,160) destine a maintenir une pièce à usiner (136) contre une butée (118) sur un plateau (116), le plateau (116) présentant une surface de travail de plateau (46), le dispositif de serrage (110,160) comprenant :
un élément de serrage (114) avec au moins une face de serrage pouvant coopérer avec la pièce à usiner ;
un ressort (117) s'engageant dans l'élément de serrage (114) pour écarter l'élément de serrage (114) de la pièce à usiner (116) ; et
un organe d'actionnement (112,150,162) pour déplacer l'élément de serrage (114) vers la butée (118) ;
caractérisé en ce que l'élément d'actionnement (112,150,162) peut être fixé sur le plateau (116) le long d'un axe de référence fixe s'intersectant avec la surface de travail du plateau (46) et comprend une surface de portée conique (126,152,166) coopérant avec l'élément de serrage (114), le mouvement de pression de la surface de portée conique (126,152,166) bloquant simultanément l'élément de serrage (114) par rapport au plateau et faisant coulisser l'élément de serrage (114) dans une direction le long de la surface de travail du plateau vers la butée (118), la surface conique étant située sur l'organe d'actionnement de telle sorte que lors du mouvement de l'organe d'actionnement le long de l'axe vers le plateau, le mouvement de pression de la surface conique n'est dirigé que vers la surface de travail du plateau (46) parallélement à l'axe de référence.

2. Dispositif selon la revendication 1, caractérisé par un élément de support (115) sur lequel est monté le ressort (117).

3. Dispositif selon la revendication 2, dans lequel le plateau (116) comprend une seconde butée (140), et caractérisé en ce que le mouvement de pression de la surface de portée conique (152, 166) bloque simultanément l'élément de support (115) par rapport au plateau et déplace l'élément de support (115) vers la seconde butée (140).

4. Dispositif selon la revendication 3, caractérisé en ce que l'élément de support (140) comprend une face de serrage pouvant coopérer avec une seconde pièce à usiner (138).

5. Dispositif selon la revendication 4, caractérisé en ce que le ressort (117) comprend une bande réalisée à partir d'un matériau élastique.

6. Dispositif selon la revendication 5, caractérisé en ce que le ressort (117) comprend un circlip (121).

7. Dispositif selon la revendication 3, caractérisé en ce que l'élément de support (115) et l'élément de serrage (114) comprennent chacun une gorge périmétrique (111,113), le ressort (117) étant situé dans les gorges périmétriques (111,113), de l'élément de serrage (114) et de l'élément de support (115).

8. Dispositif selon la revendication 3, caractérisé en ce que l'élément de serrage (114) comprend une surface de portée intérieure (122) et l'élément de support (115) comprend une surface de portée intérieure (124), l'organe d'actionnement (150,162) étant disposé entre l'élément de support (115) et l'élément de serrage (114) pour coopérer avec une portion de chaque surface de portée intérieure (122,124).

9. Dispositif selon la revendication 8, caractérisé en ce que l'organe d'actionnement (150) comprend un dispositif de fixation (150) avec une tète conique (154), la tête conique (154) coopérant avec une portion de chaque surface de portée intérieure (122,124).

10. Dispositif selon la revendication 8, caractérisé en ce que chaque surface de portée intérieure (122,124) est conique et en ce que la surface de portée conique (152,166) de l'organe d'actionnement (150,162) comprend une première portion coopérant avec la surface de portée intérieure conique (124) de l'élément de support (115) et une seconde portion coopérant avec la surface de portée intérieure conique (122) de l'élément de serrage (114), et des moyens pour déplacer l'organe d'actionnement (150,162) en direction de la surface de travail du plateau (46).

11. Dispositif selon la revendication 10, caractérisé en ce que l'organe d'actionnement (162) comprend une ouverture (178) et les moyens pour le déplacement comprennent un organe de fixation (172) comportant un axe (174) s'étendant à travers l'ouverture (178).

12. Dispositif selon la revendication 11, caractérisé en ce que l'ouverture (178) présente un diamètre supérieur au diamètre de l'axe (174) pour permettre le mouvement de l'organe d'actionnement (162) par rapport à l'axe (174).
